# EUROPEAN PATENT SPECIFICATION

(11) **EP 2 750 023 B1**
(45) Date of publication and mention of the grant of the patent: **29.07.2020**
(21) Application number: 13199580.5
(22) Date of filing: 24.12.2013
(51) Int. Cl.: G06F 3/12

(54) **Box print realized by image forming apparatus having no auxiliary storage device**
Durch Bilderzeugungsvorrichtung ohne zusätzliche Speichervorrichtung durchgeführter Boxendruck
Impression de boîte réalisée par un appareil de formation d'image n'ayant pas de dispositif de stockage auxiliaire

(30) Priority: 28.12.2012 JP 2012286963; 23.12.2013 US 201314138778
(43) Date of publication of application: 02.07.2014
(73) Proprietor: Kyocera Document Solutions Inc., Chuo-ku Osaka 540-8585 (JP)
(72) Inventor: Sato, Masafumi, Chou-KU, Osaka 540-8585 (JP); Manabe, Hiroshi, Chou-KU, Osaka 540-8585 (JP); Morimoto, Toshimitsu, Chou-KU, Osaka 540-8585 (JP); Kubono, Koji, Chou-KU, Osaka 540-8585 (JP)
(74) Representative: Houghton, Mark Phillip

(56) References cited:
- US-A1- 2001 038 462
- US-A1- 2005 068 564

## Description

### Field

Unless otherwise indicated herein, the description in this field section or the background section is not prior art to the claims in this application and is not admitted to be prior art by inclusion in this section. The present disclosure generally relates to an image forming system, an image forming apparatus, and an image forming method, for realizing a box print by the image forming apparatus having no auxiliary storage device.

### Background

A typical image forming apparatus includes a hard disk (HDD) serving as an auxiliary storage device, and has a box print function. A box, as defined in this disclosure, is a virtual storage area within the auxiliary storage device that may store any number of document files and a print job. The box print function executes a print job stored within the box, and printing is carried out by an instruction via a printer driver, a fax driver, an operation panel of the personal computer, or the like. US 2001/0038462 refers to a network system for printing digital print files implementing a box print function, where a printer fetches the print image data from a print file storage service.

However, it may be difficult for an inexpensive image forming apparatus to realize the box print function, since inexpensive image forming apparatuses commonly have no HDD and typically have a small memory capacity.

### Summary

The present invention provides a system as defined in claim 1. The system may include the features of any one or more of dependent claims 2 to 5.

The present invention also provides a method as defined in claim 6 . The method may include the features of any one or more of dependent claims 7-10 .

The present disclosure relates to an image forming system, an image forming apparatus, and an image forming method that realizes a box print by the image forming apparatus having no auxiliary storage device.

A preferred image forming system of the present disclosure includes an image forming apparatus coupled to a network and an information processing apparatus coupled to the network.

The image forming apparatus includes a button, a memory device, a printing unit including a printer or a facsimile machine, and a first control unit.

The first control unit is configured to store, in the memory device, an information processing apparatus identifier that is assigned to the button. The first control unit is also configured to transmit, to the information processing apparatus, press-down information including the information processing apparatus identifier corresponding to the button that is pressed-down, in response to a request for the press-down information that is received from the information processing apparatus via the network. The first control unit is further configured to cause the printing unit to print, on a sheet, an image based on print job data that is received from the information processing apparatus via the network.

The information processing apparatus includes an auxiliary storage device, an input unit, a printing unit driver including a printer driver or a facsimile driver, a spooler, and a second control unit.

The second control unit is configured to periodically transmit the request for the press-down information to the image forming apparatus via the network, in response to a print-start instruction via at least one of the input unit or the printing unit driver. The second control unit is also configured to determine whether or not the information processing apparatus identifier in the press-down information that is received from the image forming apparatus matches with the information processing apparatus identifier of the information processing apparatus. The second control unit is further configured to transmit the print job data specified by at least one of the input unit or the printing unit driver to the image forming apparatus via the spooler if the information processing apparatus identifier in the press-down information that is received from the image forming apparatus matches the information processing apparatus identifier of the information processing apparatus.

Additional features and advantages are described herein, and will be apparent from the following Detailed Description and the figures.

### Brief Description of Figures

All drawings are intended to illustrate some aspects and examples of the present disclosure. The drawings described are only schematic and are non-limiting, and are not necessarily drawn to scale.
Fig. 1 is a schematic diagram illustrating a configuration of an image forming system according to a first embodiment of the present disclosure.
Fig. 2 is a block diagram illustrating hardware configurations of an information processing apparatus (e.g. a PC) and an image forming apparatus in the image forming system.
Fig. 3 is a block diagram illustrating a functional configuration relating to a printer in the image forming apparatus.
Fig. 4 is a block diagram illustrating a functional configuration relating to print of the PC.
Fig. 5 is a schematic diagram illustrating a job box screen displayed by a print manager before start of printing.
Fig. 6 is a flowchart illustrating process performed by a UI unit and a system control unit in the PC in response to an operation of a user during display of the job box screen.
Fig. 7 is a flowchart illustrating process performed in the system control unit in the PC and started in response to an occurrence of a time-up event;
Fig. 8 is a block diagram illustrating a functional configuration relating to a printer in the image forming apparatus, according to a second aspect of the present disclosure.
Fig. 9 is a flowchart illustrating process performed in the system control unit in the PC and started in response to an occurrence of a time-up event, according to the second aspect of the present disclosure.

### Detailed Description

Various embodiments are described below with reference to the figures. It should be understood, however, that numerous variations from the depicted arrangements and functions are possible while remaining within the scope of the claims. For instance, one or more elements may be added, removed, combined, distributed, substituted, re-positioned, re-ordered, and/or otherwise changed. Further, where this description refers to one or more functions being implemented on and/or by one or more devices, one or more machines, and/or one or more networks, it should be understood that one or more of such entities could carry out one or more of such functions by themselves or in cooperation, and may do so by application of any suitable combination of hardware, firmware, and/or software. For instance, one or more processors may execute one or more sets of programming instructions as at least part of carrying out one or more of the functions described herein.

### [First Embodiment]

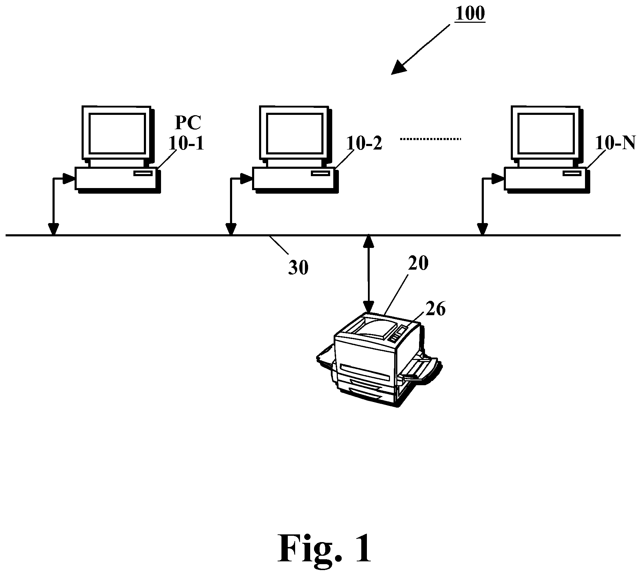

Fig. 1 is a schematic diagram illustrating the configuration of an image forming system according to a first embodiment of the present disclosure.

In the image forming system 100, personal computers (PCs) 10-1 to 10-N serving as information processing apparatuses, whose number is N, and an image forming apparatus 20 are coupled owing to a network 30. In particular, the image forming apparatus 20 is inexpensive, and has no auxiliary storage device.

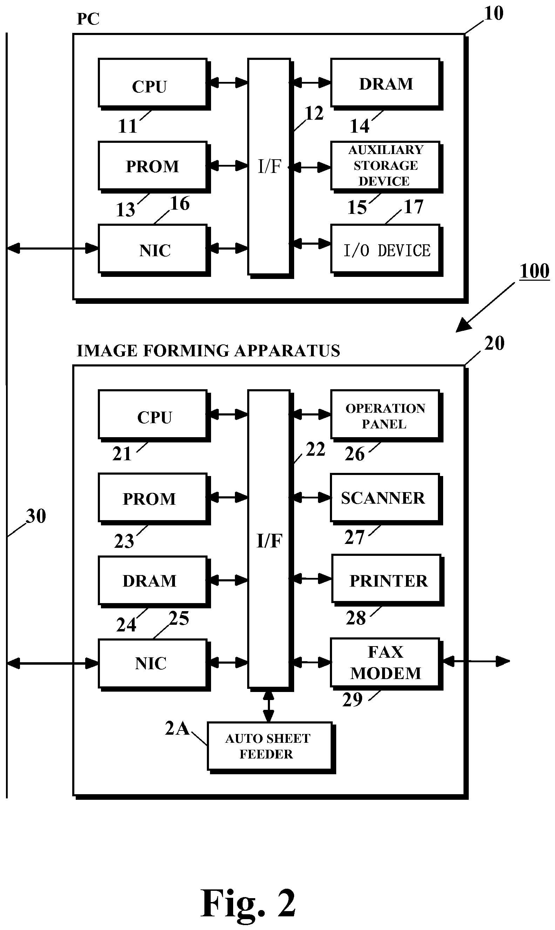

Fig. 2 is a block diagram illustrating the hardware configurations of the PC 10 and the image forming apparatus 20 in the image forming system 100.

The PC 10 is a personal computer, and a central processing unit (CPU) 11 is coupled to a programmable read only memory (PROM) 13, a dynamic random access memory (DRAM) 14, an auxiliary storage device 15, a network interface card (NIC) 16, and an input-output (I/O) device 17 via an interface 12. In Fig. 2, interface 12 may be any type of interface that may be used to allow communication among the CPU 11, the PROM 13, the DRAM 14, the NIC 16, and the I/O device 17.

The PROM 13 is, for example, a flash memory device, and a basic input/output system (BIOS) may be stored therein. The DRAM 14 is used as a main storage device. An operating system (OS) and various kinds of drivers and application are stored in the auxiliary storage device 15.

In the image forming apparatus 20, via an interface 22, a CPU 21 is coupled to a PROM 23, a DRAM 24, a network interface 25, an operation panel 26, a scanner 27, a printer 28, a facsimile (FAX) modem 29, and an auto sheet feeder 2A. In Fig. 2, interface 22 may be any type of interface that may be used to allow communication among the CPU 11, the PROM 13, the DRAM 14, the NIC 16, and the I/O device 17..

The PROM 23 is, for example, a flash memory device, and may store therein a BIOS, an OS, various kinds of drivers, and applications that run on the image forming apparatus. The DRAM 24 is used as a main storage device. The network interface 25 is coupled to the network 30. The scanner 27 is used for digitizing an image on a paper medium, and the file thereof may be used for printing, facsimile transmission, or file transmission. The printer 28 includes a print engine, a paper feeding unit, a transport unit, and a paper ejection unit, which perform various tasks to paper. In addition to this, bitmap data stored on the DRAM 24 is supplied to the printer 28, and the printer 28 forms an electrostatic latent image on a photoconductive drum on the basis of this data, develops this image using toner, transfers and fixes a toner image to a sheet of paper, and ejects the sheet of paper.

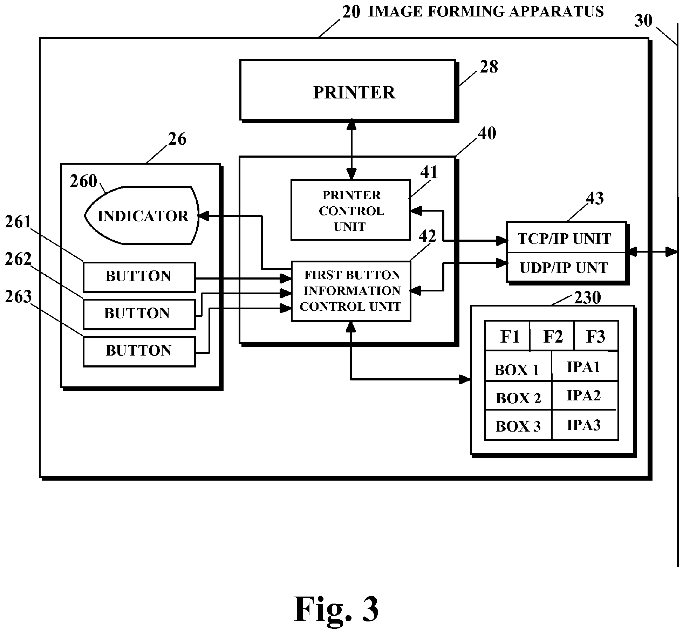

Fig. 3 is a block diagram illustrating the functional configuration relating to the printer 28 in the image forming apparatus 20.

A first control unit 40 includes a printer control unit 41 for the printer 28, and a first button information control unit 42 for the operation panel 26 and a button information storage unit 230 within the PROM 23.

The operation panel 26 includes buttons 261 to 263 used for starting the execution of a print function, and an indicator 260 displaying the button name of a button pressed down from among the buttons 261 to 263.

The button information storage unit 230 stores therein, as button information: flags F1 to F3 indicating whether or not the buttons 261 to 263 have been pressed down, respectively; IP addresses IPA1 to IPA3 serving as PC identifiers assigned to the buttons 261 to 263, respectively; and box names (BOX 1 to BOX 3) assigned to the buttons 261 to 263, respectively.

When a button 26i (i: one of 1 to 3) has been pressed down, the first button information control unit 42 refers to the button information storage unit 230, and causes the indicator 260 to display the box name, "BOX i", thereof and sets a flag Fi within the button information storage unit 230. In addition, in response to print termination from the printer control unit 41, the first button information control unit 42 resets the flag Fi that is displayed in the indicator 260 and corresponds to the "BOX i", and clears the indicator 260.

A first communication unit 43 includes the network interface 25 in Fig. 2 and a communication protocol stack for the OS. The communication protocol stack includes a TCP/IP unit and a UDP/IP unit. The first communication unit 43 individually sorts pieces of information received from a TCP/IP unit and a UDP/IP unit in the PC 10, into the printer control unit 41 and the first button information control unit 42.

The TCP/IP unit in the first communication unit 43 receives job data from a spooler in the PC 10. In addition, the UDP/IP unit in the first communication unit 43 receives, from the PC 10, a registration request for the above-mentioned IP addresses IPA1 to IPA3 and box names. The registration request is based on a Simple Network Management Protocol (SNMP) protocol. In addition, the UDP/IP unit in the first communication unit 43 receives a press-down information acquisition request and sends back, to the PC 10, the button information from the first button information control unit 42, the button information corresponding to this request and being based on the SNMP protocol.

The first button information control unit 42 includes an SNMP agent on the first communication unit 43, and control programs on the operation panel 26 and the button information storage unit 230, which serve as processing targets. The button information storage unit 230 is a portion of a management information base (MIB).

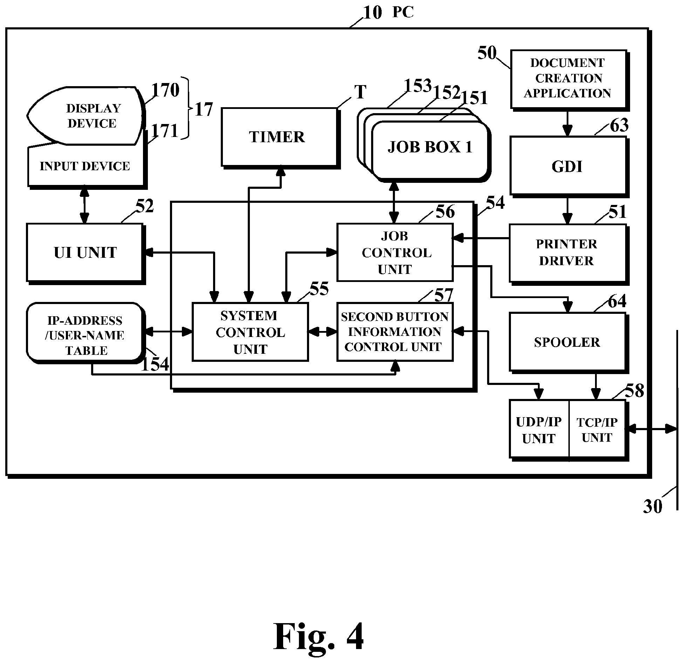

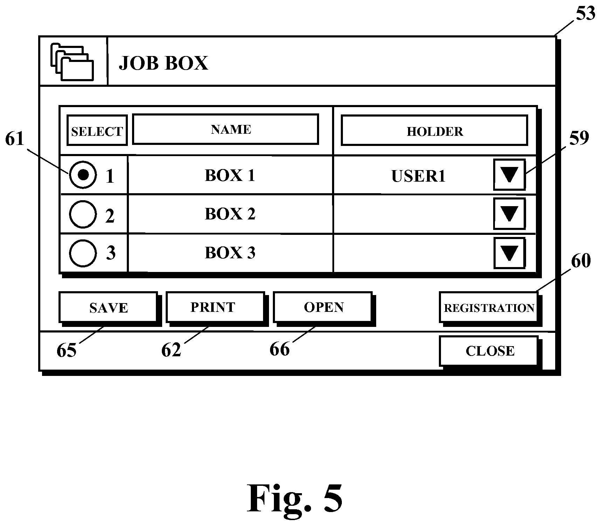

Fig. 4 is a block diagram illustrating the functional configuration relating to print of the PC 10. Fig. 5 is a schematic diagram illustrating a job box screen 53 displayed by a print manager before the start of printing.

Blocks 151 to 154 in Fig. 4 are stored within the auxiliary storage device 15 in Fig. 2. The job boxes 151 to 153 are folders for storing print job files, and the job boxes 151 to 153 correspond to the buttons 261 to 263 in Fig. 3, respectively. An IP-address/user-name table 154 indicates the IP address and the user name of each of the PCs 10-1 to 10-N.

The I/O device 17 includes a display device 170 and an input device 171. The input device 171 includes, for example, a keyboard and a pointing device.

A user may activate a document creation application 50 and create a document. Then, the user may select a print menu and activate a print manager in the OS, where the print manager is called via a printer driver 51. The print manager causes a user interface (UI) unit 52 to display a print dialog (not illustrated) in the display device 170. The user may operate the input device 171, and set job information such as a page size, single-side/double-side printing, and the number of print copies. When a setting item called "job box" has been selected in the print dialog, such a job box screen 53 as illustrated in Fig. 5 is displayed in the display device 170.

A second control unit 54 is a box print tool cooperating with the printer driver 51 and the user interface unit 52. The second control unit 54 includes a system control unit 55 controlling the units within PC 10, a job control unit 56 controlling a box print job, and a second button information control unit 57 controlling the button information of the image forming apparatus 20.

In response to an operation performed on the input device 171 by the user, the user interface (UI) unit 52 causes the display device 170 to display a menu relating to a print function. In each menu, in response to an operation performed on the input device 171 by the user, the user interface unit 52 notifies the system control unit 55 of an instruction, a setting value (selection) which has been input, and the system control unit 55 performs process according to this.

In the same way as the first communication unit 43 in Fig. 3, a second communication unit 58 includes the network interface 16 in Fig. 2 and a communication protocol stack for the OS. This communication protocol stack includes a TCP/IP unit and a UDP/IP unit. The second communication unit 58 supplies, to the second button information control unit 57, information received from the UDP/IP unit in the image forming apparatus 20.

The second button information control unit 57 includes an SNMP manager on the second communication unit 58, and a control program on the system control unit 55.

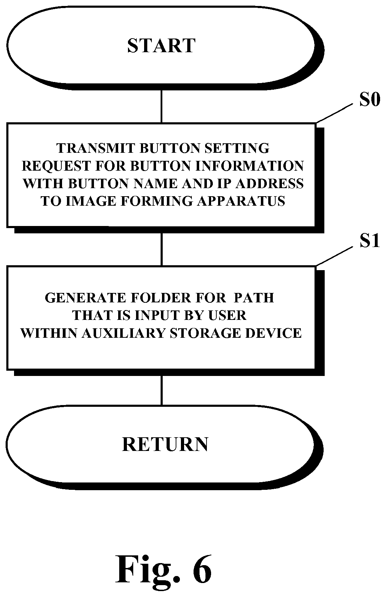

Fig. 6 is a flowchart illustrating process performed by the UI unit 52 and the system control unit 55 in the PC 10 in response to an operation of a user during display of the job box screen 53 before the user presses down one of the buttons 261 to 263 in the image forming apparatus 20.

Numeric characters, 1 to 3, in a "SELECTION" field in a left column on the job box screen 53 coincide with the identifiers of the buttons 261 to 263 in the image forming apparatus 20, respectively. Immediately before the job box screen 53 is displayed, and in response to a notice of the job box selection from the user interface unit 52, the system control unit 55 requests the first button information control unit 42 in the image forming apparatus 20 to acquire press-down information, via the second button information control unit 57. In response to this, the first button information control unit 42 sends back the content of the button information storage unit 230 to the system control unit 55 via the second button information control unit 57. The system control unit 55 reflects this button information into the job box screen 53 via the user interface unit 52.

In a step S0, the user operates the input device 171 to display a box name in a "NAME" field on the job box screen 53. The user points to an arrow icon 59 in a "HOLDER" field, and causes a drop-down list coupled to a user name in the IP-address/user-name table 154. By selecting a user name, the user selects an IP address serving as the identifier of the PC 10. Next, when the user has pressed down a registration button 60, the user interface unit 52 notifies the system control unit 55 of this. In response to this, the system control unit 55 specifies button information including a box name and an IP address on the IP-address/user-name table 154, where the IP address corresponds to a user name with respect to each of button identifiers i=1 to 3 in the "selection" field, and instructs the second button information control unit 57 to perform a button setting. In response to this, the second button information control unit 57 transmits a button setting request for the button information, to the first button information control unit 42 via the communication unit 58 and the first communication unit 43 in the image forming apparatus 20.

In response to the above-described transmission, the first button information control unit 42 overwrites and sets a box name within the button information storage unit 230 with "BOX i" with respect to each of i=1 to 3, the box name corresponding to the button identifier i. The first button information control unit 42 overwrites and sets the IP address to an IP address IPAi.

In a step S1, the user double-clicks the box name, "BOX i", and causes a path input field (not illustrated) to be displayed. The user inputs and confirms, in the path input field, the path of the "BOX i" within the auxiliary storage device 15. The user interface unit 52 notifies the system control unit 55 of the input of the path. In response to the notification, the system control unit 55 creates, as "BOX i", a folder for this path within the auxiliary storage device 15.

In Fig. 5, the user clicks a radio button 61 to select a box 15i (i=1 in Fig. 5), and presses down a print button 62. In Fig. 4, on the basis of document data, the document creation application 50 calls a function 63 within the graphics device interface (GDI) library of WINDOWS® (registered trademark). Via the printer driver 51, the GDI function 63 converts the document data into page description language (PDL) data interpretable by the image forming apparatus 20.

The job control unit 56 converts the job information into a printer job language (PJL) command. The job control unit 56 adds the job information to the PDL data, stores the job information within the selected box 15i as a job file, and transfers control to the system control unit 55. The system control unit 55 stores therein the path of this job file as a path selected by the user. In addition, the system control unit 55 activates a timer T.

The timer T includes a hardware timer within the CPU 11 in Fig. 2, which the software interval timer of the OS utilizes. Every time a predetermined time interval has elapsed, the timer T causes a time-up event to occur for the system control unit 55.

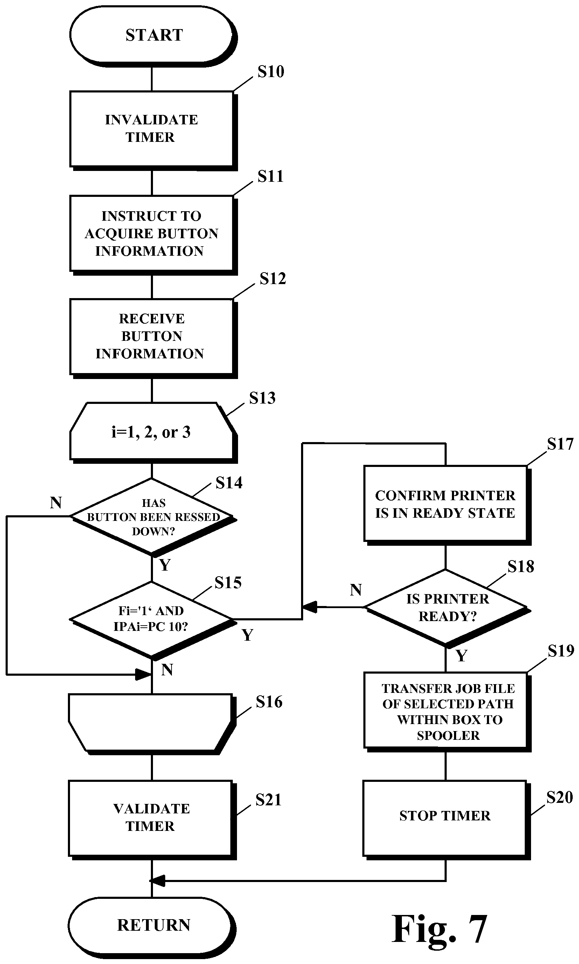

Fig. 7 is a flowchart illustrating process performed in the system control unit 55 in the PC 10 and started in response to an occurrence of a time-up event.

In a step S10, the system control unit 55 invalidates the timer T, and suppresses the occurrence of a time-up event.

In a step S11, via the second button information control unit 57, the system control unit 55 instructs the second button information control unit 57 to acquire the button information. In response to this instruction, the second button information control unit 57 requests button information from the first button information control unit 42 in the image forming apparatus 20 via the second communication unit 58 and the network 30.

In a step S12, the second button information control unit 57 receives the button information from the first button information control unit 42 via the second communication unit 58.

The second button information control unit 57 repeats processing operations ranging from a step S13 to a step S16 with respect to each of i=1 to 3 of the flag Fi and the IP address IPAi that serve as the button information, until affirmative determination is performed in the step S15.

In the steps S14 and S15, if the Fi='1' and the IP address IPAi=PC 10, the process proceeds to a step S17. In addition to this, if, with respect to all of i=1 to 3, this condition IPAi=PC 10 is not satisfied, the process proceeds to a step S21.

In the step S17, the second button information control unit 57 returns control to the system control unit 55. The system control unit 55 requests the printer control unit 41 to confirm whether or not the printer 28 is in a ready state, via the second button information control unit 57, the communication unit 58, and the first button information control unit 42 in the image forming apparatus 20. The printer control unit 41 confirms whether or not the printer 28 is in a ready state, and the printer control unit 41 sends back the result thereof to the system control unit 55 via the first button information control unit 42 and the second button information control unit 57.

In the step S19, when it is indicated that the printer 28 is in a ready state, the system control unit 55 transfers, to a spooler 64, the job file of the selected path within the box BOX i corresponding to the Fi='1' in the step S14. The spooler 64 transmits job files in the reception order thereof, to the printer control unit 41 via the communication unit 58 and the first communication unit 43 in the image forming apparatus 20.

When the printer 28 is not in a ready state, the system control unit 55 returns to the step S17. Using another timer, this loop processing operation in the steps S17 and S18 is performed periodically.

The printer control unit 41 stores the received job file in a buffer area within the DRAM 24. Then, in accordance with a buffer size, having converted PDL data into an intermediate language in units of pages or in units of blocks into which a page is divided, the printer control unit 41 subjects the data to bit map expansion, and sends the data to the print engine of the printer 28. By controlling the paper feeding/ejection mechanism of the printer 28, the printer control unit 41 causes an image to be formed on a sheet of paper, and causes this sheet of paper to be ejected.

When printing for all pages has been completed, the printer control unit 41 resets the flag Fi corresponding to the box name, "BOX i", displayed in the indicator 260, and clears this display.

In a step S20, the timer T is stopped, the path name of the stored job file is deleted, and the process is returned.

In the step S21, the timer T is validated, the suppression of the occurrence of the time-up event is cancelled, and the process is returned.

In Fig. 5, if the save button 65 has been pressed down instead of the print button 62, a job file is saved within the job box 15i in the same way as described above. However, when the job file is saved within the job box 15i, the timer T is not activated, and printing is not performed.

In Fig. 5, if an open button 66 is pressed down and a box is opened after the job box 15i has been selected, a job file within the box may be directly selected. Then, when the print button 62 is pressed down the image forming apparatus 20 is put into a print-start standby state. When the button 26i in the image forming apparatus 20 is pressed down, the path of this job file is stored, and the printing of the selected job file is performed in the same way as described above.

According to the present first embodiment, when the user has put the image forming apparatus 20 into a print-start standby state by selecting a job file stored in the auxiliary storage device 15 in the PC 10, and pressed down a button (from among the buttons 261 to 263 in the image forming apparatus 20) corresponding to a box including the selected job file, the PC 10 transmits the job file to the image forming apparatus 20 via the spooler 64, and print execution is started. Even if the image forming apparatus 20 has no auxiliary storage device, it may be possible to realize the same box print utilizing another image forming apparatus that has an auxiliary storage device.

In addition, it may be possible for the user to set, from the PC 10 via the network 30, an association between one or more selected from among the buttons 261 to 263 in the image forming apparatus 20 and the PC 10. Even if the function of the image forming apparatus 20 is enhanced as described above, it may be possible to further simplify the configuration thereof and achieve price reduction.

### [Second Aspect]

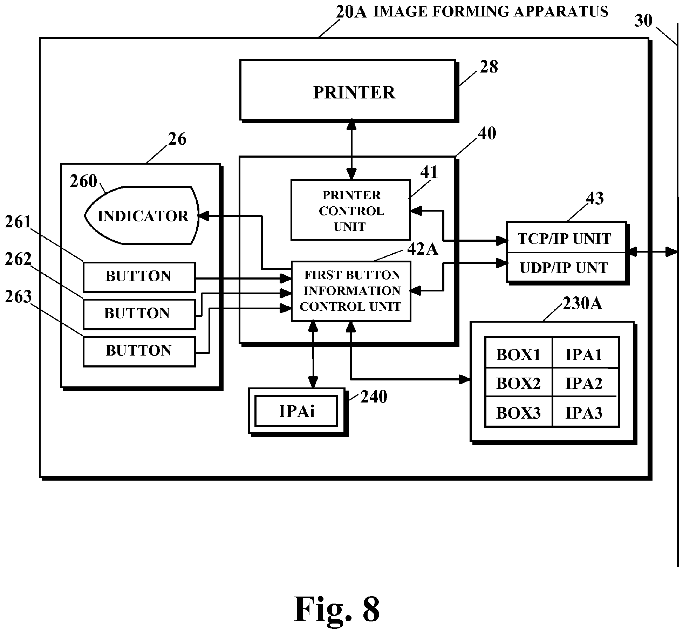

Fig. 8 is a block diagram illustrating the functional configuration relating to a printer in an image forming apparatus 20A, according to a second aspect of the present disclosure.

In the second aspect a button information storage unit 230A is included where the flags F1 to F3 are omitted from the button information storage unit 230 in Fig. 3, and a pressed-down button information storage unit 240 is included within the DRAM 24. The initial value of the pressed-down button information storage unit 240 is NULL or empty. In response to a button 26i pressed down by a user, a first button information control unit 42A copies an IP address IPAi within the button information storage unit 230A to the pressed-down button information storage unit 240. In addition, the other configuration elements of the image forming apparatus 20A and the functions thereof are the same as the configuration elements of the image forming apparatus 20 in the first embodiment and the functions thereof.

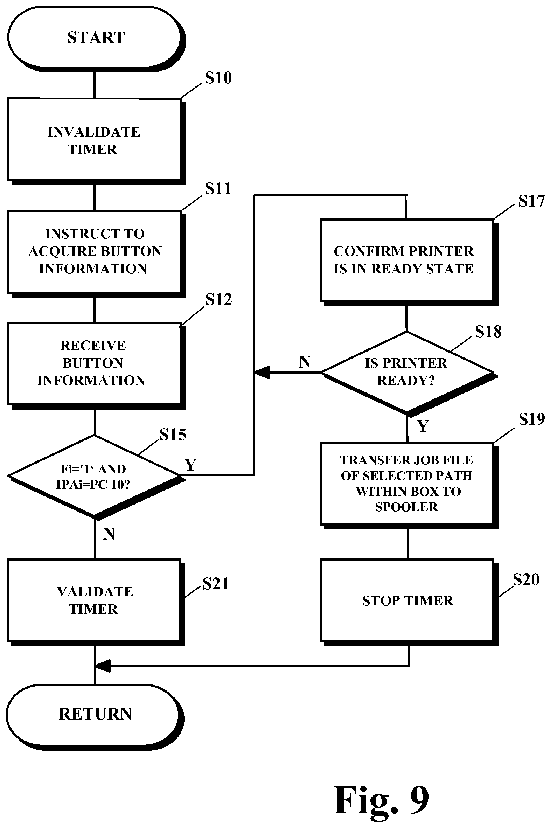

Fig. 9 is a flowchart illustrating a process performed in the system control unit in the PC 10 and started in response to an occurrence of a time-up event, according to the second aspect of the present disclosure.

In response to a press-down information acquisition request from the PC 10 in a step S11, the first button information control unit 42A sends back the IP address IPAi in the pressed-down button information storage unit 240.

In a step S15, if the IP address IPAi matches the the IP address IPA of the PC 10, the second button information control unit 57, the process proceeds to a step S17. If the IP address IPAi matches the the IP address IPA of the PC 10, the second button information control unit 57, the process proceeds to a step S21.

When printing for all pages has been completed, the first button information control unit 42A clears the display of the indicator 260, and clears the content of the pressed-down button information storage unit 240 (NULL or empty).

The other control of the flowchart illustrated in Fig. 9 is the same as the control of the flowchart illustrated in Fig. 6 in the first embodiment.

According to the present second aspect, processing operations in the first button information control unit 42A and the second button information control unit 57 become easier than in the processing operations in the first embodiment.

While various aspects and embodiments have been disclosed herein, other aspects are possible. Other designs may be used in which the above-described components are each present.

For example, while, in the first embodiment and second aspect, a case has been described where the printing unit is a printer, the printing unit may also be a facsimile (including a facsimile modem).

In addition, in the first embodiment and second aspect, when the steps S17 and S18 are omitted, the time-up interval of the timer T is shortened, the flags F1 to F3 are not used, and the image forming apparatus 20 has received the press-down information acquisition request, the image forming apparatus 20 or 20A may also directly detect which of the buttons 261 to 263 is pressed down.

In addition, the IP addresses IPA1 to IPA3 illustrated in Fig. 3 or Fig. 8 and the IP-address/user-name table 154 in Fig. 4 may also adopt configurations in which unique device IDs (UDIDs) are used in place of the IP addresses.

In addition, the printer driver 51, the first communication unit 43, and the second communication unit 58 are not limited to the protocols described in the first embodiment, and may also adopt configurations in which another protocol is used.

## Claims

1. An image forming system (100) comprising:
an image forming apparatus (20) including no auxiliary storage device, which has a box print function same as the box print function utilizing another image forming apparatus including the auxiliary storage device, and being coupled to a network (30), wherein the image forming apparatus includes an operation panel (26) including a button (261) that is used for starting the execution of the box print function, a memory device (23), a printing unit including a printer (28) or a facsimile (29), and a first control unit (40); and
an information processing apparatus (10) coupled to the network, wherein the information processing apparatus includes an auxiliary storage device (15) having a job box (151), an input unit (171), a printing unit driver including a printer driver (51) or a facsimile driver, a spooler (64), and a second control unit (50),
wherein the first control unit is configured to:
i) in response to the button being pressed, determine button information and store the button press information in the memory device, wherein the button press information comprises:
a flag indicating whether the button has been pressed;
the information processing apparatus identifier corresponding to the button; and
a box name of the job box assigned to the button;
ii) transmit, to the information processing apparatus, the button press information including the information processing apparatus identifier, in response to a request for the button press information that is received from the information processing apparatus via the network;
iii) cause the printing unit to print, on a sheet, an image data based on a job file in the job box, which is received from the information processing apparatus via the network; and
iv) respond to print termination from the printer, reset the flag corresponding to the box name displayed on the display unit, and clear the display of the box name, and
wherein the second control unit is configured to
i) periodically transmit the request for the button press information to the image forming apparatus via the network, in response to a box print-start instruction specifying the box name from the input unit or the printing unit driver,
ii) determine whether or not the information processing apparatus identifier in the button press information that is received from the image forming apparatus 20 matches the information processing apparatus identifier of the information processing apparatus, and
iii) transmit the job file in the job box of the box name that is specified by the input unit or the printing unit driver to the image forming apparatus via the spooler if the information processing apparatus identifier in the button press information that is received from the image forming apparatus matches the information processing apparatus identifier of the information processing apparatus.

2. The image forming system (100) according to Claim 1,
wherein the second control unit (50) is further configured to transmit, to the first control unit (40), an information processing apparatus identifier that is received from the input unit (171), and
wherein the first control unit is further configured to assign, to the button (261), the information processing apparatus identifier that is received from the input unit.

3. The image forming system (100) according to Claims 1 and 2,
wherein the image forming apparatus (20) further includes an indicator for displaying a name of the button (261).

4. The image forming system (100) according to any of Claims 1 to 3,
wherein the image forming apparatus (20) further includes a communication unit (43) for receiving the job file from the job box in the information processing apparatus (10).

5. The image forming system (100) according to any of Claims 1 to 4,
wherein the information processing apparatus (10) further includes a spooler (64) for receiving the job file and transmitting the job file to the printing unit.

6. An image forming method performed by an image forming system (100) including an image forming apparatus (20) including no auxiliary storage device, which has a box print function same as the box print function utilizing another image forming apparatus including the auxiliary storage device, and being coupled to a network (30), wherein the image forming apparatus includes an operation panel (26) including a button (261) that is used for starting the execution of the box print function, and a memory device (23), a printing unit including a printer (28) or a facsimile (29), and a first control unit (40); and an information processing apparatus (10) coupled to the network (30) including an auxiliary storage device (15) having a job box (151), an input unit (171), a printing unit driver including a printer driver (51) or a facsimile driver, a spooler (64), and a second control unit (50),
the image forming method comprising:
via the first control unit (40),
i) in response to the button being pressed, determining button press information and storing the button information in the memory device, wherein the button press information comprises:
a flag indicating whether the button has been pressed;
an information processing apparatus identifier corresponding to the button; and
a box name of a job box (151) assigned to the button, wherein the job box is stored in an auxiliary storage device in the information processing apparatus,
ii) transmitting, to the information processing apparatus (10), the button press information including the information processing apparatus identifier corresponding to the button (261), in response to a request for the button press information that is received from the information processing apparatus (10) via the network (30),
iii) printing, on a sheet, an image data based on the job file in the job box, which is received from the information processing apparatus (10) via the network (30)
iv) responding to print termination from the printer, resetting the flag corresponding to the box name displayed on the display unit, and clearing the display of the box name, and
via the second control unit (50),
i) periodically transmitting the request for the button press information to the image forming apparatus (20) via the network (30), in response to a print-start instruction specifying the box name from the information processing apparatus, and
ii) transmitting the job file specified by the information processing apparatus (10) to the image forming apparatus (20) if the information processing apparatus identifier in the button press information that is received from the image forming apparatus (20) matches the information processing apparatus identifier of the information processing apparatus (10).

7. The image forming method according to Claim 6, further comprising:
via the second control unit (50),
iv) transmitting, to the image forming apparatus (20), an information processing apparatus identifier that is transmitted from the information processing apparatus (10); and
via the first control unit (40),
iv) assigning, to the button (261), the information processing apparatus identifier that is transmitted from the information processing apparatus (10).

8. The image forming method according to Claim 6 , further comprising, via the first control unit (40),
v) displaying, via an indicator, a name of a button (261).

9. The image forming method according to Claim 8, further comprising,
via the first control unit (40),
vi) receiving, via a communication unit 43, the job file from the information processing apparatus (10).

10. The image forming method according to Claim 8, further comprising, via the second control unit (50),
v) receiving, via a spooler (64), the job file; and
vi) transmitting, via the spooler (64), the job file to the printing unit.

## Patentansprüche

1. Ein bilderzeugendes System (100) aufweisend:
eine bilderzeugende Einrichtung (20), welche keine Hilfsspeichervorrichtung aufweist, welche bilderzeugende Einrichtung (20) eine Felddruckfunktion hat, welche dieselbe ist wie die Felddruckfunktion, welche eine andere bilderzeugende Einrichtung verwendet, welche die Hilfsspeichervorrichtung enthält, und welche mit einem Netzwerk (30) gekoppelt ist,
wobei die bilderzeugende Einrichtung enthält
ein Bedienpanel (26), welches einen Button (261) enthält, welcher zum Starten der Ausführung der Felddruckfunktion verwendet wird,
eine Speichervorrichtung (23),
eine Druckeinheit, welche einen Drucker (28) oder ein Fax (29) enthält, und
eine erste Steuereinheit (40); und
eine informationsverarbeitende Einrichtung (10), welche mit dem Netzwerk gekoppelt ist, wobei die informationsverarbeitende Einrichtung enthält
eine Hilfsspeichervorrichtung (15), welche ein Aufgabenfeld (151), eine Eingabeeinheit (171), einen Druckereinheit Treiber, welcher einen Druckertreiber (51) oder einen Faxtreiber enthält, einen Spooler (64), und eine zweite Steuereinheit (50) hat,
wobei die erste Steuereinheit konfiguriert ist zum:
i) als Reaktion darauf, dass der Button gepresst wird, Bestimmen einer Button Information und Speichern der Button Drückinformation in der Speichervorrichtung, wobei die Button Drückinformation aufweist:
ein Kennzeichen, welches anzeigt, ob der Button gedrückt wurde;
den informationsverarbeitende Einrichtung Identifizierer, welcher zu dem Button korrespondiert; und
einen Feldnamen des Aufgabenfelds, welcher dem Button zugeordnet ist;
ii) Übertragen, zu der informationsverarbeitenden Einrichtung, der Button Drückinformation, welche den informationsverarbeitende Einrichtung Identifizierer enthält, als Reaktion auf eine Anfrage nach der Button Drückinformation, welche von der informationsverarbeitenden Einrichtung via das Netzwerk empfangen wird;
iii) Veranlassen der Druckeinheit, zu drucken, auf ein Blatt, von Bilddaten basierend auf einer Aufgabendatei in dem Aufgabenfeld, welche von der informationsverarbeitenden Einrichtung via das Netzwerk empfangen wird; und
iv) Antworten auf ein Druckbeenden von dem Drucker, Zurücksetzen des Kennzeichens, welches zu dem Feldnamen korrespondiert, welcher auf der Displayeinheit angezeigt wird, und Freimachen des Displays von dem Feldnamen, und
wobei die zweite Steuereinheit konfiguriert ist zum
i) periodischen Übertragen der Anfrage nach der Button Drückinformation zu der bilderzeugenden Einrichtung via das Netzwerk, als Reaktion auf eine Feld Druckbeginn Anweisung, welche den Feldnamen von der Eingabeeinheit oder dem Druckereinheit Treiber spezifiziert,
ii) Bestimmen, ob oder ob nicht der informationsverarbeitende Einrichtung Identifizierer in der Button Drückinformation, welche von der bilderzeugenden Einrichtung (20) empfangen wird, mit dem informationsverarbeitende Einrichtung Identifizierer der informationsverarbeitenden Einrichtung übereinstimmt, und
iii) Übertragen der Aufgabendatei in dem Aufgabenfeld des Aufgabennamens, welcher mittels der Eingabeeinheit oder des Druckeinheit Treibers spezifiziert ist, zu der bilderzeugenden Einrichtung via den Spooler, falls der informationsverarbeitende Einrichtung Identifizierer in der Button Drückinformation, welche von der bilderzeugenden Einrichtung empfangen wird, mit dem informationsverarbeitende Einrichtung Identifizierer der informationsverarbeitenden Einrichtung übereinstimmt.

2. Das bilderzeugende System (100) gemäß Anspruch 1,
wobei die zweite Steuereinheit (50) ferner konfiguriert ist zum Übertragen, zu der ersten Steuereinheit (40), eines informationsverarbeitende Einrichtung Identifizierers, welcher von der Eingabeeinheit (171) empfangen wird, und
wobei die erste Steuereinheit ferner konfiguriert ist zum Zuordnen, zu dem Button (261), des informationsverarbeitende Einrichtung Identifizierers, welcher von der Eingabeeinheit empfangen wird.

3. Das bilderzeugende System (100) gemäß den Ansprüchen 1 und 2,
wobei die bilderzeugende Einrichtung (20) ferner einen Indikator zum Anzeigen eines Namens des Buttons (261) enthält.

4. Das bilderzeugende System (100) gemäß irgendeinem der Ansprüche 1 bis 3,
wobei die bilderzeugende Einrichtung (20) ferner eine Kommunikationseinheit (43) zum Empfangen der Aufgabendatei von dem Aufgabenfeld in der informationsverarbeitenden Einrichtung (10) enthält.

5. Das bilderzeugende System (100) gemäß irgendeinem der Ansprüche 1 bis 4,
wobei die informationsverarbeitende Einrichtung (10) ferner einen Spooler (64) zum Empfangen der Aufgabendatei und zum Übertragen der Aufgabendatei zu der Druckeinheit enthält.

6. Ein bilderzeugendes Verfahren, welches mittels eines bilderzeugenden Systems (100) ausgeführt wird, welches enthält
eine bilderzeugende Einrichtung (20), welche keine Hilfsspeichervorrichtung enthält, welches bilderzeugende System (100) eine Felddruckfunktion hat, welche dieselbe ist wie die Felddruckfunktion, welche eine andere bilderzeugende Einrichtung verwendet, welche die Hilfsspeichervorrichtung enthält, und welche mit einem Netzwerk (30) gekoppelt ist,
wobei die bilderzeugende Einrichtung enthält
ein Bedienpanel (26), welches einen Button (261) enthält, welcher zum Starten der Ausführung der Felddruckfunktion verwendet wird, und
eine Speichervorrichtung (23),
eine Druckeinheit, welche einen Drucker (28) oder ein Fax (29) enthält, und
eine erste Steuereinheit (40); und
eine informationsverarbeitende Einrichtung (10), welche mit dem Netzwerk (30) gekoppelt ist, welche enthält
eine Hilfsspeichervorrichtung (15), welche ein Aufgabenfeld (151), eine Eingabeeinheit (171), einen Druckeinheit Treiber, welcher einen Druckertreiber (51) oder einen Faxtreiber enthält, einen Spooler (64) und eine zweite Steuereinheit (50) hat,
wobei das bilderzeugende Verfahren aufweist:
via die erste Steuereinheit (40),
i) als Reaktion darauf, dass der Button gepresst wird, Bestimmen einer Button Drückinformation und Speichern der Button Information in der Speichervorrichtung, wobei die Button Drückinformation aufweist:
ein Kennzeichen, welches anzeigt, ob der Button gedrückt wurde;
den informationsverarbeitende Einrichtung Identifizierer, welcher zu dem Button korrespondiert; und
einen Feldnamen des Aufgabenfelds (151), welcher dem Button zugeordnet ist, wobei das Aufgabenfeld in einer Hilfsspeichervorrichtung in der informationsverarbeitenden Einrichtung gespeichert ist,
ii) Übertragen, zu der informationsverarbeitenden Einrichtung (10), der Button Drückinformation, welche den informationsverarbeitende Einrichtung Identifizierer enthält, welcher zu dem Button (261) korrespondiert, als Reaktion auf eine Anfrage nach der Button Drückinformation, welche von der informationsverarbeitenden Einrichtung (10) via das Netzwerk (30) empfangen wird;
iii) Drucken, auf ein Blatt, von Bilddaten basierend auf einer Aufgabendatei in dem Aufgabenfeld, welche von der informationsverarbeitenden Einrichtung (10) via das Netzwerk (30) empfangen wird;
iv) Antworten auf ein Druckbeenden von dem Drucker, Zurücksetzen des Kennzeichens, welches zu dem Feldnamen korrespondiert, welcher auf der Displayeinheit angezeigt wird, und Freimachen des Displays von dem Feldnamen, und
via die zweite Steuereinheit (50),
i) periodisches Übertragen der Anfrage nach der Button Drückinformation zu der bilderzeugenden Einrichtung (20) via das Netzwerk (30), als Reaktion auf eine Druckbeginn Anweisung, welche den Feldnamen von der informationsverarbeitenden Einrichtung spezifiziert, und
ii) Übertragen der Aufgabendatei, welche mittels der informationsverarbeitenden Einrichtung (10) spezifiziert ist, zu der bilderzeugenden Einrichtung (20), falls der informationsverarbeitende Einrichtung Identifizierer in der Button Drückinformation, welche von der bilderzeugenden Einrichtung (20) empfangen wird, mit dem informationsverarbeitende Einrichtung Identifizierer der informationsverarbeitenden Einrichtung (10) übereinstimmt.

7. Das bilderzeugende Verfahren gemäß Anspruch 6, ferner aufweisend:
via die zweite Steuereinheit (50),
iv) Übertragen, zu der bilderzeugenden Einrichtung (20), eines informationsverarbeitende Einrichtung Identifizierers, welcher von der informationsverarbeitenden Einrichtung (10) übertragen wird; und
via die erste Steuereinheit (40),
iv) Zuordnen, zu dem Button (261), des informationsverarbeitende Einrichtung Identifizierers, welcher von der informationsverarbeitenden Einrichtung (10) übertragen wird.

8. Das bilderzeugende Verfahren gemäß Anspruch 6, ferner aufweisend
via die erste Steuereinheit (40),
v) Anzeigen, via einen Indikator, eines Namens eines Buttons (261).

9. Das bilderzeugende Verfahren gemäß Anspruch 8, ferner aufweisend,
via die erste Steuereinheit (40),
vi) Empfangen, via eine Kommunikationseinheit 43, der Aufgabendatei von der informationsverarbeitenden Einrichtung (10).

10. Das bilderzeugende Verfahren gemäß Anspruch 8, ferner aufweisend,
via die zweite Steuereinheit (50),
v) Empfangen, via einen Spooler (64), der Aufgabendatei; und
vi) Übertragen, via den Spooler (64), der Aufgabendatei zu der Druckeinheit.

## Revendications

1. Un système de formation d'images (100) comprenant :
un appareil de formation d'images (20) qui ne comporte aucun dispositif de mémoire auxiliaire et possède une fonction d'impression à l'aide d'une boîte similaire à la fonction d'impression à l'aide d'une boîte utilisant un autre appareil de formation d'images qui comporte le dispositif de mémoire auxiliaire et est couplé à un réseau (30), l'appareil de formation d'images comportant un panneau de commande (26) incluant un bouton (261) qui est utilisé pour démarrer l'exécution de la fonction d'impression à l'aide d'une boîte, un dispositif de mémoire (23), une unité d'impression incluant une imprimante (28) ou une télécopie (29), et une première unité de commande (40), et
un appareil de traitement d'informations (10) qui est couplé au réseau, l'appareil de traitement d'informations comportant un dispositif de stockage auxiliaire (15) possédant une boîte de travail (151), une unité d'entrée (171), un pilote d'unité d'impression qui inclut un pilote d'imprimante (51) ou un pilote de télécopie, un spouleur (64) et une seconde unité de commande (50),
la première unité de commande étant configurée pour :
(i) en réponse à l'actionnement du bouton, déterminer l'information relative au bouton et stocker l'information d'actionnement du bouton dans le dispositif de mémoire, l'information d'actionnement du bouton comprenant :
une balise indiquant que le bouton a été actionné,
l'identificateur d'appareil de traitement d'informations correspondant au bouton et
un nom de boîte de la boîte de travail affectée au bouton,
(ii) en réponse à une requête d'information d'actionnement du bouton reçue de l'appareil de traitement d'informations via le réseau, transmettre à l'appareil de traitement d'informations l'information relative à l'actionnement du bouton incluant l'identificateur d'appareil de traitement d'informations,
(iii) faire imprimer, par l'unité d'impression, des données d'image basées sur un fichier de travail dans la boîte de travail reçu de l'appareil de traitement d'informations via le réseau, sur une feuille, et
(iv) répondre à une fin d'impression de l'imprimante, remettre à zéro la balise correspondant au nom de boîte affichée sur l'unité d'affichage et effacer le nom de boîte de l'affichage, et
la seconde unité de commande étant configurée pour :
(i) en réponse à une instruction de boîte de démarrage d'impression spécifiant le nom de boîte de l'unité d'entrée ou du pilote de l'unité d'impression, transmettre périodiquement la requête d'information relative à l'actionnement du bouton à l'appareil de formation d'images via le réseau,
(ii) déterminer si oui ou non l'identificateur d'appareil de traitement d'informations dans l'information relative à l'actionnement du bouton reçue de l'appareil de formation d'images (20) correspond à l'identificateur d'appareil de traitement d'informations, et
(iii) transmettre le fichier de travail dans la boîte de travail, dont le nom de boîte est spécifié par l'unité d'entrée ou par le pilote de l'unité d'impression à l'appareil de formation d'images via le spouleur si l'identificateur d'appareil de traitement d'informations dans l'information relative à l'actionnement du bouton reçue de l'appareil de formation d'images correspond à l'identificateur d'appareil de traitement d'informations.

2. Système de formation d'images (100) suivant la revendication 1,
dans lequel la seconde unité de commande (50) est en plus configurée pour transmettre à la première unité de commande (40) un identificateur d'appareil de traitement d'informations reçu de l'unité d'entrée (171) et
dans lequel la première unité de commande est en plus configurée pour affecter au bouton (261) l'identificateur d'appareil de traitement d'informations reçu par l'unité d'entrée.

3. Système de formation d'images (100) suivant la revendication 1 et 2,
dans lequel l'appareil de formation d'images (20) inclut en plus un indicateur pour l'affichage d'un nom de bouton (261).

4. Système de formation d'images (100) suivant une des revendications 1 à 3,
dans lequel l'appareil de formation d'images (20) inclut en plus une unité de communication (43) pour la réception du fichier de travail de la boîte de travail dans l'appareil de traitement d'informations (10).

5. Système de formation d'images (100) suivant la revendication 1 à 4,
dans lequel l'appareil de traitement d'informations (10) comporte en plus un spouleur (64) pour la réception du fichier de travail et la transmission du fichier de travail à l'unité d'impression.

6. Procédé de formation d'image exécuté par un système de formation d'image (100) comprenant un appareil de formation d'image (20) qui ne comporte aucun dispositif de stockage auxiliaire et possède une fonction d'impression à l'aide d'une boîte similaire à la fonction d'impression à l'aide d'une boîte utilisant un autre appareil de formation d'images qui comporte le dispositif de mémoire auxiliaire et est couplé à un réseau (30), l'appareil de formation d'images comportant un panneau de commande (26) incluant un bouton (261) qui est utilisé pour démarrer l'exécution de la fonction d'impression à l'aide d'une boîte, et un dispositif de mémoire (23), une unité d'impression incluant une imprimante (28) ou une télécopie (29), et une première unité de commande (40), et un appareil de traitement d'informations (10) qui est couplé au réseau, l'appareil de traitement d'informations comportant un dispositif de stockage auxiliaire (15) possédant une boîte de travail (151), une unité d'entrée (171), un pilote d'unité d'impression qui inclut un pilote d'imprimante (51) ou un pilote de télécopie, un spouleur (64), et une seconde unité de commande (50),
le procédé de formation d'image comprenant les étapes suivantes :
via la première unité de commande (40),
(i) en réponse à l'actionnement du bouton, déterminer l'information relative à l'actionnement du bouton et stocker l'information relative au bouton dans le dispositif de mémoire, l'information relative à l'actionnement du bouton comprenant :
une balise indiquant que le bouton a été actionné,
un identificateur d'appareil de traitement d'informations correspondant au bouton, et
un nom de boîte d'une boîte de travail (151) affectée au bouton, la boîte de travail étant stockée dans un dispositif de stockage auxiliaire dans l'appareil de traitement d'informations,
ii) en réponse à une requête d'information relative à l'actionnement du bouton reçue de l'appareil de traitement d'informations (10) via le réseau (30), transmettre à l'appareil de traitement d'informations (10) l'information relative à l'actionnement du bouton qui inclut l'identificateur d'appareil de traitement d'informations correspondant au bouton (261),
iii) imprimer sur une feuille des données d'image sur la base du fichier de travail dans la boîte de travail reçu de l'appareil de traitement d'informations (10) via le réseau (30),
iv) répondre à une fin d'impression de l'imprimante, remettre à zéro la balise correspondant au nom de boîte affiché sur l'unité d'affichage et effacer l'affichage du nom de boîte, et
via la seconde unité de commande (50),
i) en réponse à une instruction de démarrage d'impression spécifiant le nom de boîte de l'appareil de traitement d'informations, transmettre périodiquement la requête d'information relative à l'actionnement du bouton à l'appareil de formation d'image (20) via le réseau (30), et
ii) transmettre le fichier de travail spécifié par l'appareil de traitement d'informations (10) à l'appareil de formation d'image (20), si l'identificateur d'appareil de traitement d'informations dans l'information relative à l'actionnement du bouton reçue de l'appareil de formation d'image (20) correspond à l'identificateur d'appareil de traitement d'informations de l'appareil de traitement d'informations (10).

7. Procédé de formation d'image suivant la revendication 6, le procédé comprenant, en plus, les étapes suivantes :
via la seconde unité de commande (50),
iii) transmettre à l'appareil de formation d'image (20) un identificateur d'appareil de traitement d'informations transmis par l'appareil de traitement d'informations (10), et
via la première unité de commande (40),
iv) affecter au bouton (261) l'identificateur d'appareil de traitement d'informations transmis par l'appareil de traitement d'informations (10).

8. Procédé de formation d'image suivant la revendication 6, le procédé comprenant, en plus, l'étape suivante :
via la première unité de commande (40),
v) afficher un nom de bouton (261) via un indicateur.

9. Procédé de formation d'image suivant la revendication 8, le procédé comprenant, en plus, l'étape suivante :
via la première unité de commande (40),
vi) recevoir le fichier de travail de l'appareil de traitement d'informations (10) via une unité de communication 43.

10. Procédé de formation d'image suivant la revendication 8, le procédé comprenant, en plus, les étapes suivantes :
via la seconde unité de commande (50)
vi) recevoir le fichier de travail via le spouleur (64), et
vii) transmettre le fichier de travail à l'unité d'impression via le spouleur (64).
